Europäisches Patentamt

(19) European Patent Office

Office européen des brevets

(11) EP 0 661 169 B1

## (12) EUROPEAN PATENT SPECIFICATION

(45) Date of publication and mention
of the grant of the patent:
**21.07.1999 Bulletin 1999/29**

(51) Int. Cl.$^6$: **B41M 5/00**, G11B 5/00

(21) Application number: **94309418.5**

(22) Date of filing: **16.12.1994**

(54) **Composite ink-jet and magnetic recording sheet**

Verbundfolie für Tintenstrahl- und für magnetische Aufzeichnungsverfahren

Feuille composite pour l'enregistrement par jet d'encre et magnétique

(84) Designated Contracting States:
**DE GB IT**

(30) Priority: **17.12.1993 JP 34329993**
**18.03.1994 JP 7278894**
**25.03.1994 JP 7775994**

(43) Date of publication of application:
**05.07.1995 Bulletin 1995/27**

(73) Proprietor: **OJI PAPER CO., LTD.**
**Tokyo (JP)**

(72) Inventors:
• **Kato, Masaru**
**Yokohama-shi, Kanagawa (JP)**
• **Kawashima, Yoshiharu**
**Katsushika-ku, Tokyo (JP)**

(74) Representative:
**Arthur, Bryan Edward**
**Withers & Rogers**
**4 Dyer's Buildings**
**Holborn**
**London EC1N 2JT (GB)**

(56) References cited:
**EP-A- 0 315 063**          **DE-A- 4 121 875**

• **DATABASE WPI Section Ch, Week 8811, Derwent**
**Publications Ltd., London, GB; Class A89, AN**
**88-074445 & JP-A-63 028 689 (OJI PAPER KK) 6**
**February 1988**
• **PATENT ABSTRACTS OF JAPAN vol. 15, no. 480**
**(P-1284) 5 December 1991 & JP-A-03 207 071**
**(BITA KK) 10 September 1991**
• **W.Scott et al.:"Properties of paper: an**
**introduction"(TAPPI Press),Pages 55-56 and 64-**
**67**

**Description**

BACKGROUND OF THE INVENTION

1. Field of the Invention

The present invention relates to a composite ink-jet and magnetic recording sheet. More particularly, the present invention relates to a composite recording sheet capable of recording magnetic information and of converting a portion of the magnetic information to visible ink jetted images by using an aqueous ink-jet printer.

The composite ink jet and magnetic recording sheet of the present invention is useful for coupon tickets, merchandise coupon cards, prepaid cards, and various automatic system cards, for example, highway coupon cards.

2. Description of the Related Art

Due to recent developments in the performance of, for example, printing speed, resolving power and color density (chroma), of ink-jet printers, the recording sheets for the printer are required to provide enhanced properties, for example, a high speed absorption, high absorption capacity and appropriate spread of ink. Accordingly, coated recording sheets having a ink-receiving layer formed on a surface thereof have been developed.

For example, Japanese Unexamined Patent Publication (Kokai) No. 62-158,084 discloses a process for producing an ink-jet recording medium containing fine synthetic silica particles and having a high aqueous ink-absorption, an excellent color reproducibility and a high optical density. Namely, to meet the above-mentioned requirements, it is usual to provide a coated layer containing, as a principal component, a white pigment having a high liquid absorption, for example, fine synthetic silica particles, and formed on a substrate sheet comprising, as a principal component, cellulose pulp.

Recently, various prepaid cards, for example, telephone cards and train cards are rapid appearing and thus the prepaid cards have attached public attention. Namely, the prepaid cards are rapidly spreading in various traffic businesses and distribution businesses.

The prepaid cards are magnetic recording cards. The rapid spread of the magnetic recording cards is due to the following advantages:

(1) The magnetic recording layer has a high information storage capacity.
(2) The information stored in the magnetic recording layer can be easily and precisely read.
(3) The cards can be easily handled by an automatic ticket machine or ticket vending machine.
(4) Fractional sums of money can be dealt with.
(5) The cards are an effective laborsaving device.

Usually, the balance of the prepaid card is indicated by a hole-punching method, electrophoto-graphic method, static recording method, ink printing method, diazo-duplicating method or thermosensitive recording method. The hole punching method is disadvantageous in that the card per se can not indicate a particular balance thereon and thus the utilization history of the card is not definite and punch waste is accumulated in a reading or writing device.

The other recording methods except for the thermosensitive recording method are disadvantageous in that these methods require developing and fixing steps, and thus the recording apparatus is relatively large and the recording cost is high.

The thermosensitive recording method is advantageous in that no-developing and fixing steps are necessary and the recording apparatus is relatively small and is effective for laborsaving. However, this method is disadvantageous in that the persistency of the recorded images is not always satisfactory, and sometimes the recorded images are not clear due to a sticking phenomenon of a thermal head.

In view of practical use conditions, the prepaid cards are required to have a higher water-resistance, heat-resistance, recording surface strength, curl-resistance, mechanical strength and durability than those of usual recording sheets for a printer. Also, the prepaid cards have the same value as cash, and thus the support sheets of the prepaid cards are usually made from plastic films or synthetic paper sheets having a high durability and thus are different from popular paper sheets. Although this type of support sheet has a high water resistance, the support sheet comprising, for example, a polyester, is disadvantageous in a high cost and a high risk of damaging an incinerator using to burn used card due to a high temperature derived from a high heat generation thereof. Where vinyl chloride polymer film is used for the support sheet, the cost for the prepaid card is low. However, the incineration of the used prepaid cards results in the generation of a harmful chlorine gas.

The synthetic paper sheet has a high water resistance and causes little or no problem with incineration, and thus is widely used for the support sheet of the prepaid card. However, the synthetic paper sheet is disadvantageous in a low heat resistance. Therefore, when a recording sheet for prepaid cards having a support synthetic paper sheet is used in a printer using a thermal head, for example, a thermosensitive recording system, the support sheet sometimes shrinks due to the heat applied by the thermal head during the recording operation, and thus the recording sheet cannot smoothly travel in the printer and the images cannot be precisely printed on the recording sheet.

Further, when the prepaid card is left to stand in a high temperature environment, or when a visible image-recording layer for indicating the balance of money and a magnetic recording layer are formed on a support sheet, at a high temperature, the prepaid card sometimes shrinks, curls or wrinkles.

Usually, the magnetic recording layer and/or the balance-indicating layer (visible image-recording layer) of the prepaid card are printed with a desired pattern. If the printed prepaid card is produced in large numbers, the printing is carried out by using an industrial printing process, for example, an offset printing process. However, when the printing is applied to a small number of prepaid cards, the printing cost becomes high. Also, some conventional prepaid cards are difficult to be color-printed. Also, sometimes, it is required to previously print one surface of the card with a desired pattern and color, and thereafter print both the surfaces or the other surface of the card with a desired pattern and color. However, in the conventional printing system for the prepaid cards, it is impossible to print the card at a desired stage.

Accordingly, there has been a strong demand for a new type of magnetic recording sheet free from the above-mentioned disadvantages.

SUMMARY OF THE INVENTION

An object of the present invention is to provide a composite ink jet and magnetic recording sheet capable of recording magnetic information and of printing visible images with a high quality by using an aqueous ink jet printer at a high speed.

The above-mentioned object can be attained by the composite ink jet and magnetic recording sheet of the present invention, which comprises:

(A) a composite substrate sheet comprising (a) a support sheet and (b) a magnetic recording layer formed on a surface of the support sheet and comprising magnetic particles and a binder resin; and
(B) an ink-receiving layer formed on a surface of the composite substrate sheet, and comprising amorphous silica particles and a binder resin,
the support sheet having a thickness of 200 to 350 $\mu$m and exhibiting a bending stiffness of 9.81 to 29.42 mN (1000 to 3000 mgf) determined by the Gurley method.

In an embodiment of the composite ink jet and magnetic recording sheet of the present invention, the ink-receiving layer is arranged on a surface of the support sheet of the composite substrate sheet.

In another embodiment of the composite ink jet and magnetic recording sheet of the present invention, the ink-receiving layer is arranged on a surface of the magnetic recording layer of the composite substrate sheet.

BRIEF DESCRIPTION OF THE DRAWINGS

Figure 1 is an explanatory cross-sectional profile of an embodiment of the composite ink jet and magnetic recording sheet of the present invention,
Fig. 2 is an explanatory cross-sectional profile of another embodiment of the composite ink jet and magnetic recording sheet of the present invention, and
Fig. 3 is an explanatory cross-sectional profile of still another embodiment of the composite ink jet and magnetic recording sheet of the present invention.

DESCRIPTION OF THE PREFERRED EMBODIMENTS

In the composite ink jet and magnetic recording sheet of the present invention, a composite substrate sheet (A) comprises (a) a support sheet and (b) a magnetic recording layer formed on a surface of the support sheet and an ink-receiving layer (B) formed on a surface of the composite substrate sheet (A).

The support sheet usable for the present invention is preferably selected from non-coated paper sheets, for example, fine paper sheets, moderate paper sheets and recycled paper sheets which are made from natural pulp and by a neutral paper-making method or an acid paper-making method; coated paper sheets having a coating layer comprising a pigment and a binder resin, for example, art paper sheets; multilayered synthetic paper sheets comprising a plurality of thermoplastic resin films each containing 8 to 65% by weight of an inorganic fine pigment particles, for example, calcium carbonate, anhydrous clay, diatomaceous earth, talc and silica particles, each oriented monoaxially (in one direction) or diaxially (in two directions) across each other at right angles, and laminated on each other; and synthetic and natural resin films.

The multilayered synthetic paper sheet includes a three-layered synthetic paper sheet comprising a base thermoplastic resin film and mono-axially or di-axially oriented paper-like front and back thermoplastic resin films laminated on the front and back surface of the base film, and four or more-layered synthetic paper sheet comprising the similar base, front and back thermoplastic resin films to those of the three-layered synthetic paper sheet and at least one additional layer having, for example, an enhanced whiteness or another function, oriented diaxially, and laminated on the front and/or back film.

The content and type of the inorganic pigment are established in consideration of the degrees of whiteness and opaqueness. The synthetic paper sheet may be an opaque sheet or semi-transparent sheet like a tracing paper sheet.

The thermoplastic resin for the synthetic paper sheet comprises a member selected from polyolefin resins, for example, polyethylene, polypropylene, ethylenepropylene copolymers, and ethylene-vinyl acetate copolymers and mixtures of at least two members selected from the above-mentioned polymers and copolymers and polystyrene and acrylic acid ester polymers and copolymers.

The basis weight of the support sheet is variable depending on the final use of the resulting recording sheet and is not limited to a specific range thereof. Preferably, the basis weight of the support sheet is in the range of from 100 to 300 g/m$^2$.

The support sheet usable for the present invention exhibits a bending stiffness of 9.81 to 29.42 mN (1000 to 3000 mgf). The bending stiffness of paper or board material is also referred to as a Gurley stiffness.

The bending stiffness of a specimen sheet can be determined by a Gurley method and is defined by the following equation:

$$\text{Bending stiffness (mN)} = \frac{Et^3}{12} \cdot \frac{b}{L^2}$$

wherein E represents a Young's modules (mN/mm$^2$) of a specimen, t represents a thickness (mm) of the specimen, b represents a width (mm) of the specimen and L represents a length (mm) of the specimen.

The bending stiffness can be measured by using a Gurley stiffness tester as illustrated in, for example, Japan TAPPI, paper and pulp test method No. 40-83.

If the bending stiffness of the support sheet is less than 9.81 mN (1000 mgf), the resultant composite recording sheet is unsatisfactory in stiffness thereof and the resultant composite card made from the composite recording sheet is easily folded or bent and thus is unable to exhibit a necessary function for a recording card. Also, if the bending stiffness is more than 29.42 mN (3000mgf), although the resultant composite recording sheet or card exhibits a satisfactory resistance to folding and bending, this excessively stiff composite sheet or card exhibits a poor travelling property in a printer and sometimes the printed images become unclear.

The support sheet usable for the present invention has a thickness of 200 to 350 μm.

If the thickness is less than 200 μm, the resultant composite recording sheet or card has an unsatisfactory resistance to bending or folding and thus is useless as a practical composite recording sheet or card. Also, if the thickness is more than 350 μm, the resulted composite recording sheet or card exhibits a reduced travelling property in a printer and becomes costly. The composite ink jet and magnetic recording sheet or card of the present invention can be printed with a desired pattern and color. However, the excessively large thickness causes the resultant composite recording sheet or card to exhibit a reduced operating efficiency for printing.

In the composite ink jet and magnetic recording sheet of the present invention, a magnetic recording layer is formed on a surface of the support sheet so as to provide a composite substrate sheet.

The magnetic recording layer comprises magnetic particles and a binder resin. The magnetic particles preferably comprise at least one member selected from γ-iron oxide particles, cobalt-modified γ-iron oxide particles, barium ferrite particles, and chromium oxide particle.

The binder resin for the magnetic recording layer preferably comprises at least one member selected from the group consisting of polyvinyl alcohol and it's derivatives, proteins, for example, casein, styrenebutadiene copolymers, methyl methacrylate-butadiene copolymers, styrene-butadiene-methyl methacrylate terpolymers, polyacrylic resins polyvinyl acetate resins, polyurethane resins, polyvinyl chloride resins, polyester resins and vinyl chloride-vinyl acetate copolymers. The water-insoluble polymers, copolymers and resins are used in the state of a latex or an aqueous emulsion.

The magnetic recording layer is formed by coating a coating liquid containing the magnetic particles and the binder resin dispersed, emulsified and/or dissolved in an aqueous medium or an organic solvent. The use of the aqueous medium is advantageous from an economical point of view. The organic solvent preferably comprises at least one member selected from toluene, xylene, and methylethylketone.

The magnetic recording layer is formed by coating the coating liquid on a surface of the support sheet by using conventional coating apparatus, for example, a bar coater, roll coater or air knife coater.

The amount of the magnetic recording layer is variable depending on the final use of the composite recording sheet. Preferably, the magnetic recording layer is provided in an amount of 25 to 40 g/m$^2$.

In the composite ink jet and magnetic recording sheet of the present invention, an ink-receiving layer is formed on a surface of the composite substrate sheet, namely on a surface of the support sheet free from the magnetic recording layer or on the magnetic recording layer surface.

The ink-receiving layer comprises fine amorphous silica particles and a binder resin.

The amorphous silica particles can be produced by a wet process or a dry process. In the wet amorphous silica-producing process, the fine amorphous silica particles are produced by neutralizing an aqueous solution of sodium silicate with an acid so as to precipitate or gelate the amorphous silica particles. This wet method includes a precipitation method and a gelation method. In the dry process, silicon tetrachloride is used as a starting material, burnt together with hydrogen and oxygen so as to deposit silica particles. The amorphous silica is a so-called white carbon and is referred to as silicic anhydride or hydrous silicic acid. These silicic acid is also utilized for aluminum silicate and magnesium silicate.

The amorphous silica particles preferably have an average size of 0.5 to 15 $\mu$m. Also, the amorphous silica particles to be contained in the ink-receiving layer preferably have a high oil absorption of, for example, 100 to 400 ml/100g.

The amorphous silica particles may be used together with a small amount of at least one other pigment, for example, zeolite, calcium carbonate, diatomaceous earth, kaolin, anhydrous clay, talc, aluminum hydroxide and organic pigments, for example, plastic pigments, which are usable for usual paper coating.

The amorphous silica particles are preferably contained in a content of 30 to 80% by weight based on the total weight of the ink-receiving layer. If the content is less than 30% by weight, the resultant ink-receiving layer exhibits an unsatisfactory ink-absorption. Also, the content of the inorganic pigment particles is more than 80% by weight, the resultant ink-receiving layer exhibits an unsatisfactory mechanical strength.

Since the composite recording sheet of the present invention has a different use than that of a conventional ink jet recording sheet and is used for prepaid cards which are often exposed to an external force causing them to be rubbed or scratched, the ink-receiving layer must have a high resistance to abrasion and scratching so that it can be always clearly printed.

The binder resin for the ink-receiving layer preferably comprises at least one member selected from the group consisting of polyvinyl alcohol, it's derivatives, proteins, for example, casein, starch and it's derivatives, styrene-butadiene copolymers, methyl methacrylate-conjugated diene copolymers, for example, methyl methacrylate-butadiene copolymers, acrylic polymers, for example, acrylic acid ester polymers and copolymers and methacrylic acid ester polymers and copolymers, vinyl compound polymers, for example, ethylene-vinyl acetate copolymers, derivatives of the above-mentioned polymers and copolymers modified with at least one functional group, for example, carboxyl group or cationic group, thermosetting resins, for example, melamine-formaldehyde resins and urea-formaldehyde resins, maleic aclydride copolymers, polyacrylamide resins, polyurethane resins, unsaturated polyester resins, polyvinyl butyryl resins and alkyd resins. The water-insoluble polymers, copolymers and resins are employed in the state of a latex or aqueous emulsion.

The above-mentioned specific binder resins have a satisfactory adhesion to the pigment particles and an excellent affinity to the ink, and thus are contributory to enhancing the ink-receiving (absorption) property of the ink-receiving layer.

In the ink-receiving layer of the present invention, the binder resin is preferably contained in a content of 20 to 70% by weight, more preferably 25 to 60% by weight, based on the total weight of the ink-receiving layer. If this content is less than 20% by weight, the resultant ink-receiving layer has an unsatisfactory adhesion to the composite substrate sheet, and a poor mechanical strength and thus exhibits an increased risk of abrasion or scratching of the ink-receiving layer. When the ink-receiving layer is abraded or scratched, the recording function thereof is reduced and the recorded information is lost. When the content of the binder resin is more than 70% by weight, although the resultant ink-receiving layer exhibits an enhanced adhesion to the composite substrate sheet, the layer exhibits an unsatisfactory ink-receiving (absorption) property due to a decrease in the content of the inorganic pigment particles.

The composite ink jet and magnetic recording sheet of the present invention obtained by coating a surface of the composite substrate sheet with an ink-receiving layer can be directly used for a practical recording. Otherwise, the composite ink jet and magnetic recording sheet is treated by a super calender or a gloss calender to enhance the smoothness of the surfaces of the composite sheet.

The amount of the ink-receiving layer of the present invention is variable depending on the final use of the composite recording sheet, and the ink-absorption, recording characteristics, persistency and opaqueness required thereby. Preferably, the amount of the ink-receiving layer is in the range of from 3 to 20 $g/m^2$. If this amount is less than 3 $g/m^2$, the resultant ink-receiving layer exhibits an unsatisfactory ink-receiving (absorption) property which causes the applied ink images to be deformed or spread so as to mix the colored inks, and to become unclear, the necessary drying time for the ink images to become long, and the parts, for example, conveying rolls, of the printer and hands of the operator to be stained by the ink. If the amount is more than 20 $g/m^2$, the resultant ink-receiving layer cannot be firmly adhered to the composite substrate sheet due to the large thickness of the coat layer, and sometimes causes an ink jetting nozzle applied to the coat layer to be blocked, and the production cost to be too high.

In an embodiment of the composite ink jet and magnetic recording sheet of the present invention, the support sheet of the composite substrate sheet comprises a multilayered sheet comprising a plurality of plastic resin films. Each of the plastic resin films comprises a polyolefin resin matrix and an inorganic pigment dispersed in the matrix and is oriented in at least one direction, for example, monoaxially (,for example, in the longitudinal direction) or diaxially (in the longitudinal and transverse directions of the sheet). Also, the support sheet exhibits a thermal shrinkage of 0.5% or less both in the longitudinal and transverse directions of the support sheet at a temperature of 100°C.

The above-mentioned specific support sheet is contributory to enhancing the quality and the color density of the recorded ink images, and the heat resistance of the resultant composite recording sheet.

The thermal shrinkage of the support sheet is determined by the Heat shrinkage test of JIS K 6734-1975, at a temperature of 100°C.

If the thermal shrinkage of the support sheet is more than 0.5% in at least one of the longitudinal and transverse directions, the resultant thermal shrinkage produced in the support sheet when an ink-receiving layer and/or a magnetic recording layer is formed thereon at an elevated temperature, causes the resultant composite recording sheet to be curled or wrinkled so as to obstruct the smooth recording and printing of the composite recording sheet.

To adjust the thermal shrinkage of the multilayered support sheet to a level of 0.5% or less, the multilayered support sheet is heat-relaxed without hindering the shrinkage thereof, by bringing the support sheet into contact with a heating medium, for example, a heating roll, so as to release a stress generated when the plastic resin films were oriented (stretched) in the production procedure thereof, and still retained in the films. Otherwise, low thermal shrinkage plastic resin films are produced by drawing at a low speed under which substantially no stress is retained in the resultant oriented films. The low thermal shrinkage multilayered synthetic paper sheets are available, for example, under the trademark of Synthetic Paper KAG, from Oji Yuka Goseishi K.K.

In this embodiment, the support sheet is a low thermal shrinkage multilayered polyolefine synthetic paper sheet.

The multilayered synthetic paper sheet may be selected from the afore-mentioned three or more layered synthetic paper sheets in which three or more thermoplastic resin films containing fine inorganic pigment particles oriented mono- or di-axially, are laminated. The thermoplastic resin is preferably selected from polyolefine resins, for example, polyethylene, polypropylene, ethylene-propylene copolymers, and ethylene-vinyl acetate copolymers, and mixtures of at least two members selected from the above-mentioned polymers and copolymers, polyethylene, and acrylic acid ester polymers and copolymers. The inorganic pigment in the multilayered synthetic paper sheet is preferably selected from calcium carbonate, anhydrous clay, diatomaceus earth, talc and silica.

Preferably, the inorganic pigment is contained in an amount of 8 to 65% by weight in the plastic resin films.

In the composite ink jet and magnetic recording sheet of the present invention, the multi-layered support sheet of the composite substrate sheet is coated with an ink-receiving layer containing amorphous silica particles dispersed in the binder resin.

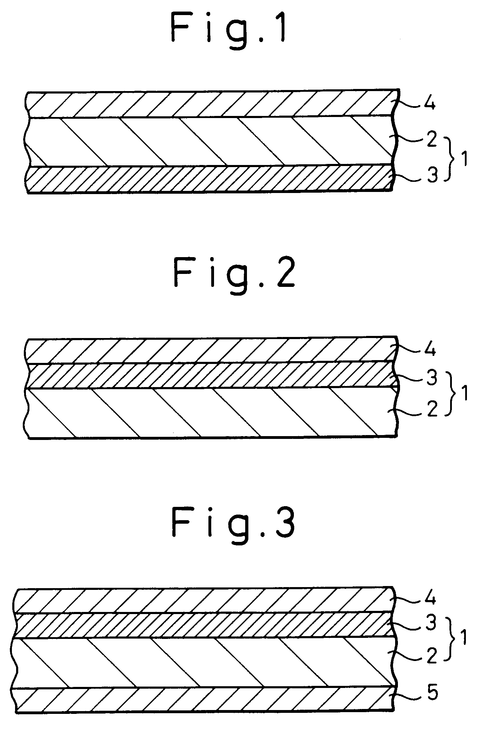

In the composite ink jet and magnetic recording sheet of the present invention as indicated in Fig. 1, a composite substrate sheet 1 has a support sheet 2 and a magnetic recording layer 3, and an ink-receiving layer 4 is arranged on the surface of the support sheet 2 free from the magnetic recording layer 3. In this type of composite recording sheet, the magnetic information is recorded on one surface side thereof and the visible ink images are recorded on the opposite surface side thereof.

In another embodiment of the ink jet and magnetic recording sheet of the present invention as shown in Fig. 2, an ink-receiving layer 4 is formed on a magnetic recording layer 3 of a composite substrate sheet 1. In this type of composite recording sheet, the magnetic information and the visible ink images are recorded on one and the same surface side thereof.

Also, this type of composite recording sheet is advantageous in that the magnetic recording layer which is unavoidably colored, is covered by the ink-receiving layer which may be colorless (white) or colored a desired color, and thus the appearance thereof is good.

In still another embodiment of the composite ink jet and magnetic recording sheet of the present invention as shown in Fig. 3, an ink-receiving layer 4 in formed on a magnetic recording layer 3 of a composite substrate sheet 1, and an additional ink-receiving layer 5 is formed on a support sheet 2 of the composite substrate sheet 1.

In this type of composite recording sheet, the magnetic information and the visible ink images are recorded on one surface side thereof and other visible ink images are recorded on the opposite surface side thereof.

The additional ink-receiving layer can be formed in the same manner as that for the above-mentioned ink-receiving layer.

The ink-receiving layer and the additional ink-receiving layer preferably comprise the fine amorphous silica particles and the binder resin.

EXAMPLES

The present invention will be further explained by the following specific examples which are merely representative and do not in any way restrict the scope of the present invention.

In each of the Examples and Comparative Examples, the resultant composite ink jet and magnetic recording sheet was subjected to the following ink jet recording property and card applicability tests.

The composite recording sheet was subjected to an ink jet recording procedure by using an ink jet-printer (trademark: BJC-80J, made by Canon in Examples 1 and 2 and Comparative or Trademark: Desk Writer-C, made by Hewlett Packard) to test the ink-absorption, color brightness and forwarding property in the printer, of the composite recording sheet.

(1) Ink absorption

The ink absorption was represented by a time in seconds necessary to complete the drying of the ink printed on the composite recording sheet.

| Drying time | Ink absorption | Class |
|---|---|---|
| 5 seconds or less | Excellent | 3 |
| More than 5 seconds but not more than 10 seconds | Slightly unsatisfactory | 2 |
| More than 10 seconds | Bad | 1 |

(2) Color brightness

The printing was carried out by using a black ink, a yellow ink, a magenta ink and a cyan ink. The printed colored images in each color were observed by naked eye, and evaluated in the following classes.

| Color brightness | Class |
|---|---|
| Bright | 3 |
| Slightly unsatisfactory | 2 |
| Bad | 1 |

(3) Optical density

A solid mark of 2 cm $\times$ 2 cm was printed with a black colored ink. The optical density of the black colored mark was measured by a McBeth optical density tester.

(4) Print quality

The quality of the printed images was evaluated into the following classes.

| Print quality | Class |
|---|---|
| Good | 3 |

(continued)

| Print quality | Class |
|---|---|
| Satisfactory | 2 |
| Bad | 1 |

(5) Offset print-applicability

The composite recording sheet was subjected to an offset printing tester. The offset print-applicability was evaluated into the following classes.

| Offset print-applicability | Class |
|---|---|
| The printed images were excellent | 3 |
| The printed images were satisfactory | 2 |
| The printed images were unsatisfactory | 1 |

(6) Feeding property

Ten composite recording sheets were placed in a sheet feeder of the printer, and automatically supplied into the printer printed and delivered. The feeding property of the sheets were observed and classified as follows.

| Feeding property | Class |
|---|---|
| All ten sheets were smoothly passed through the printer | 3 |
| 6 to 9 sheets could smoothly pass through the printer | 2 |
| 0 to 5 sheets could smoothly pass through the printer | 1 |

The applicability of the composite recording sheets to cards was evaluated by a surface strength and folding endurance thereof.

(1) Surface strength

The surfaces of the composite recording sheet were rubbed with a finger nail and the results were evaluated as follows.

| Surface strength | Class |
|---|---|
| No peeling occurred | 3 |
| Slightly peeled | 2 |
| Completely peeled | 1 |

(2) Folding endurance

The folding endurance test was carried out in accordance with JIS P 8115 - 1976 by a MIT tester.

| Folding endurance | Class |
|---|---|
| Folding number at break was more than 100,000 | 3 |
| Folding number at break was 1,000 or more but less than 100,000 | 2 |
| Folding number at break was less than 1,000 | 1 |

The resistance of the composite recording sheet to curling was determined by placing the sheet on a horizontal plane and an average of heights in mm of the four corners of the sheets was measured.

The thermal shrinkage of the support sheet was measured in accordance with Japanese Industrial Standard (JIS) K 6734.

Example 1

A pulp slurry for paper-making was prepared by mixing 20 parts by weight of precipitated calcium carbonate into an aqueous slurry of 100 parts by weight of a hard wood bleached kraft pulp, adding 2 parts by weight of cationic starch and 0.3 part by weight of an alkenyl succinic anhydride neutral sizing agent and fully stirring the mixture. The pulp slurry was fed to a multi cylinder type Fordlinear paper machine, the resultant wet paper was dried to a water content of 10% by weight, a solution of 7% by weight of oxidized starch in water was applied in a dry weight of 4 $g/m^2$ to both the surfaces of the dried paper by using a size press machine, the sized paper was dried to a water content of 7% by weight. The resultant fine paper sheet had a basis weight of 200 $g/m^2$ and a thickness of 210 $\mu$m and exhibited a bending (Gurley) stiffness of 12.16 mN (1240mgf). A coating liquid (I) for an ink-receiving layer and a coating liquid (II) for a magnetic recording layer were prepared in the following compositions.

Coating liquid (I)

| Component | Part by weight |
|---|---|
| Fine amorphous silica particles (Trademark: Fineseal, made by Tokuyama Soda K.K.) | 100 |
| Polyvinyl alcohol (Trademark: R-1130, Kuraray) | 40 |

Coating liquid (II)

| Component | Part by weight |
|---|---|
| $\gamma$-iron oxide | 100 |
| Polyvinyl alcohol | 20 |
| Styrene-butadiene copolymer latex | 15 |

The coating liquid (I) gas coated on a surface of the fine paper sheet by using a testing bar coater and dried to provide an ink-receiving layer having a dry weight of 11 $g/m^2$. Then, the coating liquid (II) was coated on the opposite surface of the fine paper sheet in the same manner as mentioned above and dried to provide a magnetic recording layer having a dry weight of 40 $g/m^2$.

A composite ink jet and magnetic recording sheet was obtained.

Test results are shown in Table 1.

Example 2

A composite ink jet and magnetic recording sheet was produced by the same procedures as in Example 1 with the following exceptions.

The fine paper used as a support sheet was replaced by a multilayered synthetic paper sheet which was available under the trademark of Yupo FPG-300, from Oji Yuka Goseishi K.K., contains an inorganic pigment, and had a bending (Gurley) stiffness of 27.75 mN (2830 mgf) and a thickness of 300 $\mu$m.

An ink-receiving layer was formed in a dry weight of 12 g/m$^2$ by coating a surface of the multilayered synthetic paper sheet with the coating liquid (I) by using a testing bar coater, and drying the coating layer.

A magnetic recording layer was formed in a dry weight of 30 g/m$^2$ by coating the coating liquid (II) on the opposite surface of the multilayered synthetic paper sheet and drying the coating layer.

Test results are shown in Table 1.

Comparative Example 1

A composite ink jet and magnetic recording sheet was produced by the same procedures as in Example 1 with the following exceptions.

The same fine paper sheet as in Example 1 was treated with a calender. The resultant support sheet had a bending (Gurley) stiffness of 8.53 mN (870 mgf) and a thickness of 185 $\mu$m.

An ink-receiving layer was formed in a dry weight of 11 g/m$^2$ by coating a surface of the calendered support sheet with the coating liquid (I) and drying the coating layer.

Also, a magnetic recording layer was formed in a dry weight of 35 g/m$^2$ by coating the opposite surface of the calendered support sheet with the coating liquid (II) and drying the coating layer.

Test results are shown in Table 1.

Comparative Example 2

A pulp slurry for paper-making was prepared by mixing 20 parts by weight of precipitated calcium carbonate into an aqueous slurry of 100 parts by weight of a hard wood bleached kraft pulp, adding 2 parts by weight of cationic starch and 0.25 part by weight of a ketene dimer neutral sizing agent and fully stirring the mixture. The pulp slurry was fed to a testing paper machine to prepare a fine paper sheet. The resultant fine paper sheet had a basis weight of 350 g/m$^2$ and a thickness of 395 $\mu$m and exhibited a bending (Gurley) stiffness of 31.57 mN (3200 mgf).

The fine paper sheet was subjected as a support sheet to the same composite ink jet and magnetic recording sheet-producing procedures as in Example 1 with the following exceptions.

The coating liquid (I) was coated on a surface of the fine paper sheet by using a testing bar coater and dried to provide an ink-receiving layer having a dry weight of 9 g/m$^2$. Then, the coating liquid (II) was coated on the opposite surface of the fine paper sheet in the same manner as mentioned above and dried to provide a magnetic recording layer having a dry weight of 30 g/m$^2$.

A composite ink jet and magnetic recording sheet was obtained.

Test results are shown in Table 1.

Table 1

| Item Example No. | | Ink absorp-tion | Color bright-ness | Feeding property in printer | Surface strength | Folding endur-ance |
|---|---|---|---|---|---|---|
| Example | 1 | 3 | 3 | 3 | 3 | 3 |
| | 2 | 3 | 3 | 3 | 3 | 3 |
| Comparative Example | 1 | 3 | 3 | 3 | 3 | 1 |
| | 2 | 3 | 3 | 1 | 3 | 3 |

Table 1 clearly indicates that the composite recording sheets of the Examples of the present invention exhibited satisfactory ink absorption, ink color brightness and surface strength similar to those of the Comparative Examples and significantly superior feeding property in the printer and folding endurance in comparison with those of the Comparative Examples.

Example 3

A support sheet was prepared by heat treating a multilayered synthetic paper sheet (available under the trademark of Yupo FPG-200, made by Oji Yuka Goseishi K.K.) comprising diaxially oriented, inorganic pigment-containing polypropylene films having a thickness of 200 μm.

The heat-treated support sheet had thermal shrinkages of 0.5% in the longitudinal direction and 0.3% in the transverse direction thereof, a thickness of 200 μm and a bending (Gurley) stiffness of 10.79 mN (1110 mgf).

A coating liquid (III) for an ink-receiving layer and a coating liquid (IV) for a magnetic recording layer were prepared in the following compositions.

Coating liquid (III)

| Component | Part by weight |
|---|---|
| Fine amorphous silica particles (Trademark: Mizukasil, made by Mizusawa Kagaku K.K.) | 100 |
| Polyvinyl alcohol (Trademark: R-1130, Kuraray) | 40 |

Coating liquid (IV)

| Component | Part by weight |
|---|---|
| γ-iron oxide | 100 |
| Polyvinyl alcohol | 20 |

(continued)

| Component | Part by weight |
|---|---|
| Styrene-butadiene copolymer latex | 15 |

The coating liquid (III) was coated on a surface of the support sheet by using a testing bar coater and dried to provide an ink-receiving layer having a dry weight of 12 g/m$^2$. Then, the coating liquid (IV) was coated on the opposite surface of the support sheet in the same manner as mentioned above and dried to provide a magnetic recording layer having a dry weight of 30 g/m$^2$.

A composite ink jet and magnetic recording sheet was obtained.

Test results are shown in Table 2.

Example 4

A composite ink jet and magnetic recording sheet was produced by the same procedures as in Example 3 with the following exceptions.

The support sheet consisted of a low thermal shrinkage multilayered synthetic paper sheet which was available under the trademark of Yupo KAG-250, from Oji Yuka Goseishi K.K., contains an inorganic pigment, and had a bending (Gurley) stiffness of 25.12 mN (2663 mgf), thickness of 250 μm, and thermal shrinkages of 0.45% in the longitudinal direction and 0.10% in the transverse direction thereof.

An ink-receiving layer was formed in a dry weight of 11 g/m$^2$ by coating a surface of the support sheet with the coating liquid (III) by using a testing bar coater, and drying the coating layer.

A magnetic recording layer was formed in a dry weight of 30 g/m$^2$ by coating the coating liquid (IV) on the opposite surface of the multilayered synthetic paper sheet and drying the coating layer.

The test results are shown in Table 2.

Example 5

A composite ink jet and magnetic recording sheet was produced by the same procedures as in Example 3 with the following exceptions.

The support sheet consisted of a low thermal shrinkage multilayered synthetic paper sheet which was available under the trademark of Yupo KAG-200, from Oji Yuka Goseishi K.K., contains an inorganic pigment, and had a bending (Gurley) stiffness of 10.44 mN (1065 mgf), thickness of 200 μm, and thermal shrinkages of 0.39% in the longitudinal direction and 0.07% in the transverse direction thereof.

An ink-receiving layer was formed in a dry weight of 9 g/m$^2$ by coating a surface of the support sheet with the coating liquid (III) by using a testing bar coater, and drying the coating layer.

A magnetic recording layer was formed in a dry weight of 35 g/m$^2$ by coating the coating liquid (IV) on the opposite surface of the multilayered synthetic paper sheet and drying the coating layer.

The test results are shown in Table 2.

Comparative Example 3

A composite ink jet and magnetic recording sheet was produced by the same procedures as in Example 3 with the following exceptions.

The support sheet consisted of a multilayered synthetic paper sheet which was available under the trademark of Yupo FPG-200, from Oji Yuka Goseishi K.K., contains an inorganic pigment, and had a bending (Gurley) stiffness of 10.89 mN (1110 mgf), thickness of 200 μm, and thermal shrinkages of 1.30% in the longitudinal direction and 1.09% in the transverse direction thereof.

An ink-receiving layer was formed in a dry weight of 10 g/m$^2$ by coating a surface of the support sheet with the coating liquid (III) by using a testing bar coater, and drying the coating layer.

A magnetic recording layer was formed in a dry weight of 35 g/m$^2$ by coating the coating liquid (IV) on the opposite surface of the support sheet and drying the coating layer.

The test results are shown in Table 2.

Comparative Example 4

A magnetic recording sheet was produced by the same procedures as in Example 3 with the following exceptions.

The ink-receiving layer was not provided on the support sheet.

A magnetic recording layer was formed in a dry weight of 35 g/m$^2$ by coating the coating liquid (IV) on the opposite surface of the support sheet and drying the coating layer.

The test results are shown in Table 2.

Table 2

| Item<br>Example No. | | Ink absorp-tion | Optical density | Curl<br>(mm) | Thermal shrinkage of support sheet (%) | |
|---|---|---|---|---|---|---|
| | | | | | Longitudinal direction | Transverse direction |
| Example | 3 | 3 | 1.37 | 0 | 0.50 | 0.30 |
| | 4 | 3 | 1.38 | 0.2 | 0.45 | 0.10 |
| | 5 | 3 | 1.41 | 0.1 | 0.39 | 0.07 |
| Comparative Example | 3 | 3 | 1.39 | 5.1 | 1.30 | 1.09 |
| | 4 | 1 | 1.35 | 0.1 | 0.50 | 0.30 |

Table 2 shows that the composite ink jet and magnetic recording sheets of the present invention each having a support sheet having a low thermal shrinkage had a high ink absorption, high color density and high curl resistance. The composite recording sheet of Comparative Example 3 exhibited a poor curl resistance. The magnetic recording sheet of Comparative Example 4 having no ink-receiving layer exhibited a poor ink absorption.

Example 6

A pulp slurry for paper-making was prepared by mixing 18 parts by weight of precipitated calcium carbonate into an aqueous slurry of 100 parts by weight of a hard wood bleached kraft pulp, adding 1.7 parts by weight of cationic starch and 0.3 part by weight of an alkenyl succinic anhydride neutral sizing agent and fully stirring the mixture. The pulp slurry was fed to a multi cylinder type Fordlinear paper machine, the resultant wet paper was dried to a water content of 10% by weight, a solution of 7% by weight of oxidized starch in water was applied in a dry weight of 4 g/m$^2$ to both the surfaces of the dried paper by using a size press machine, the sized paper was dried to a water content of 7% by weight. The resultant fine paper sheet had a basis weight of 200 g/m$^2$ and a thickness of 210 μm and exhibited a bending (Gurley) stiffness of 12.75 mN (1300 mgf).

A coating liquid (VI) for a magnetic recording layer and a coating liquid (V) for an ink-receiving layer were prepared in the following compositions.

Coating liquid (V)

| Component | Part by weight |
|---|---|
| γ-iron oxide | 100 |
| Polyvinyl alcohol | 25 |
| Styrene-butadiene copolymer latex | 15 |

Coating liquid (VI)

| Component | Part by weight |
|---|---|
| Fine amorphous silica particles (Trademark: Fineseal, made by Tokuyama Soda K.K.) | 100 |
| Polyvinyl alcohol (Trademark: R-1130, Kuraray) | 37 |

The coating liquid (V) was coated on a front surface of the fine paper sheet by using a testing bar coater and dried to provide a magnetic recording layer having a dry weight of 40 g/m$^2$. Then, the coating liquid (VI) was coated on the surface of the magnetic recording layer in the same manner as mentioned above and dried to provide an ink-receiving layer having a dry weight of 12 g/m$^2$.

A composite ink jet and magnetic recording sheet was obtained.

Test results are shown in Table 3.

Example 7

A composite ink jet and magnetic recording sheet was produced by the same procedures as in Example 6 with the following exceptions.

The fine paper used as a support sheet was replaced by a multilayered synthetic paper sheet which was available under the trademark of Yupo FPG-200, from Oji Yuka Goseishi K.K., contains an inorganic pigment, and had a bending (Gurley) stiffness of 10.89 mN (1110 mgf) and a thickness of 200 $\mu$m.

A magnetic recording layer was formed in a dry weight of 30 g/m$^2$ by coating a front surface of the multilayered synthetic paper sheet with the coating liquid (V) by using a testing bar coater, and drying the coating liquid layer.

An ink-receiving layer was formed in a dry weight of 10 g/m$^2$ by coating the coating liquid (VI) on the surface of the magnetic recording layer and drying the coating liquid layer.

Further, the surface of the multilayered synthetic paper sheet was coated with the coating liquid (VI) and dried to form an additional ink-receiving layer having a dry weight of 8 g/m$^2$.

Test results are shown in Table 3.

Example 8

A composite ink jet and magnetic recording sheet was produced by the same procedures as in Example 6 with the following exceptions.

The support sheet consisted of a multilayered synthetic paper sheet, Yupo FPG-250, the magnetic recording layer was formed in an amount of 35 g/m$^2$ and the ink-receiving layer was formed in an amount of 12 g/m$^2$.

The test results are shown in Table 3.

Comparative Example 5

A magnetic recording sheet was produced by the same procedure as in Example 6, except that a magnetic recording layer was formed in an amount of 30 g/m$^2$ on a front surface of the fine paper sheet by using a testing bar coater. No ink-receiving layer was formed on the magnetic recording layer.

Comparative Example 6

A composite ink jet and magnetic recording sheet was produced by the same procedures as in Example 7, except that the ink-receiving layer was formed on the magnetic recording layer, by coating a coating liquid (VII) having the following composition:

14

Coating liquid (VII)

| Component | Part by weight |
|---|---|
| Calcium carbonate pigment (Trademark: Brilliant 15, made by Shiraishi Kogyo K.K.) | 100 |
| Polyvinyl alcohol (Trademark: PVA-117, made by Kuraray) | 40 |

The dried ink-receiving layer had a weight of 11 $g/m^2$.

The test results are shown in Table 3.

Example 9

A composite ink jet and magnetic recording sheet was produced by the same procedures as in Example 8, except that a magnetic recording layer in a dry weight of 32 $g/m^2$ was formed by coating the coating liquid (V) on a front surface of the multilayered synthetic paper sheet (Yupo FPG-250), and an ink-receiving layer in a dry weight of 11 $g/m^2$ was formed by coating the coating liquid (VI) on the magnetic recording layer. No additional ink-receiving layer was formed on the back surface of the synthetic paper sheet.

The test results are shown in Table 3.

Comparative Example 7

A composite ink jet and magnetic recording sheet was produced by the same procedures as in Example 7, except that a magnetic recording layer in a dry weight of 30 $g/m^2$ was formed by coating the coating liquid (V) on a front surface of the synthetic paper sheet (Yupo FPG-200), an ink-receiving layer in a dry weight of 12 $g/m^2$ was formed by coating the coating liquid (VII) on the magnetic recording layer, and an additional ink-receiving layer in a dry weight of 9 $g/m^2$ was formed by coating the coating liquid (VII) on a back surface of the synthetic paper sheet.

The test results are shown in Table 3.

Table 3

| Example No. | | Ink jet recording properties | | | | | | Applicability to offset printing | |
|---|---|---|---|---|---|---|---|---|---|
| | | Ink absorption | | Optical density | | Quality of ink image | | | |
| | | Front side | Back side | Front side | Back side | Front side | Back side | Front side | Back side |
| Example | 6 | 3 | 2 | 1.49 | 1.32 | 3 | 3 | 3 | 3 |
| | 7 | 3 | 3 | 1.46 | 1.51 | 3 | 3 | 3 | 3 |
| | 8 | 3 | 1 | 1.46 | 1.40 | 3 | 2 | 3 | 3 |
| | 9 | 1 | 3 | 1.37 | 1.48 | 1 | 3 | 1 | 3 |
| Comparative Example | 5 | 1 | 2 | 1.36 | 1.31 | 1 | 3 | 1 | 3 |
| | 6 | 1 | 1 | 1.13 | 1.38 | 2 | 2 | 3 | 3 |
| | 7 | 1 | 1 | 1.15 | 1.16 | 2 | 2 | 3 | 3 |

Note: Front side ... The surface side of the composite recording sheet having the magnetic recording layer
Back side ... The surface side of the composite recording sheet free from the magnetic recording layer

**Claims**

1. A composite ink-jet and magnetic recording sheet comprising:

   (A) a composite substrate sheet comprising (a) a support sheet and (b) a magnetic recording layer formed on a surface of the support sheet and comprising magnetic particles and a binder resin; and
   (B) an ink-receiving layer formed on a surface of the composite substrate sheet, and comprising amorphous silica particles and a binder resin,
   the support sheet having a thickness of 200 to 350 μm and exhibiting a bending stiffness of 9.81 to 29.42 mN (1000 to 3000 mgf) determined by the Gurley method.

2. The composite recording sheet as claimed in claim 1, wherein the ink-receiving layer is arranged on the surface of the support sheet of the composite substrate sheet free from the magnetic recording layer.

3. The composite recording sheet as claimed in claim 1, wherein the ink-receiving layer is arranged on the magnetic recording layer of the composite substrate sheet.

4. The composite recording sheet as claimed in claim 3, wherein an additional ink-receiving layer is arranged on the support sheet surface of the composite substrate sheet.

5. The composite recording sheet as claimed in claim 1, wherein the support sheet of the composite substrate sheet consists of a member selected from the group consisting of a non-coated paper sheet, coated paper sheets and synthetic polymer sheets.

6. The composite recording sheet as claimed in claim 1, wherein the support sheet of the composite substrate sheet has a basis weight of 100 to 300 g/m$^2$.

7. The composite recording sheet as claimed in claim 1, wherein the amorphous silica particles of the ink-receiving layer have an average size of 0.5 to 15 $\mu$m.

8. The composite recording sheet as claimed in claim 1, wherein the amorphous silica particles of the ink-receiving layer exhibit an oil absorption of 100 to 400 ml/100g.

9. The composite recording sheet as claimed in claim 1, wherein the amorphous silica particles in the ink-receiving layer are present in a content of 30 to 80% by weight based on the total weight of the ink-receiving layer.

10. The composite recording sheet as claimed in claim 1, wherein the binder resin of the ink-receiving layer comprises at least one member selected from the group consisting of polyvinyl alcohol and its derivatives, proteins, starch, starch derivatives, styrene-butadiene copolymers, methyl methacrylate-conjugated diene copolymers, acrylic acid ester polymers and copolymers, methacrylic acid ester polymers and copolymers, ethylene-vinyl acetate copolymers, derivatives of the above-mentioned polymers and copolymers modified with at least one functional group, melamine-formaldehyde resins, urea-formaldehyde-resins, maleic anhydride copolymers, polyacrylamide resins, polyurethane resins, unsaturated polyester resins, polyvinyl butyral resins and alkyd resins.

11. The composite sheet as claimed in claim 1, wherein in the ink-receiving layer the binder resin is present in a content of 20 to 70% by weight.

12. The composite recording sheet as claimed in claim 1, wherein the magnetic particles of the magnetic recording layer comprise at least one member selected from the group consisting of $\gamma$-iron oxide, cobalt-modified iron oxide, barium ferrite and chromium oxides.

13. The composite recording sheet as claimed in claim 1, wherein the binder resin of the magnetic recording layer comprises at least one member selected from the group consisting of polyvinyl alcohol and it's derivatives, proteins, styrene-butadiene copolymers, methyl methacrylate-butadiene copolymers, styrene-butadiene-methyl methacrylate terpolymers, polyacrylic resins, polyvinyl acetate resins, polyurethane resins, polyvinyl chloride resins, polyester resins and vinyl chloride-vinyl acetate copolymers.

14. The composite recording sheet as claimed in claim 1, wherein the ink-receiving layer is present in an amount of 3 to 20 g/m$^2$.

15. The composite recording sheet as claimed in claim 1, wherein the magnetic recording layer is present in an amount of 25 to 40 g/m$^2$.

16. The composite recording sheet as claimed in claim 1, wherein the support sheet of the composite substrate sheet comprises a multilayered sheet comprising a plurality of plastic resin films each comprising a polyolefine resin matrix and an inorganic pigment dispersed in the matrix and each oriented in at least one direction, the support sheet exhibiting a thermal shrinkage of 0.5% of less determined by the heat shrinkage test of JIS K 6734-1975 both in the longitudinal and transverse directions thereof at a temperature of 100°C.

17. The composite recording sheet as claimed in claim 16, wherein the polyolefin resin in the plastic resin films comprises at least one member selected from the group consisting of polyethylene, polypropylene, ethylene-propylene copolymers, ethylene-vinyl acetate copolymers.

18. The composite recording sheet as claimed in claim 16, wherein the inorganic pigment in the plastic resin films comprises at least one member selected from the group consisting of calcium carbonate, anhydrous clay, diatomaceus earth, talc and silica.

19. The composite recording sheet as claimed in claim 16, wherein the inorganic pigment in the plastic resin films in present in a content of 8 to 65% by weight.

**Patentansprüche**

1. Verbundfolie für Tintenstrahl- und Magnetaufzeichnungen, umfassend:

   (A) eine Verbundsubstratfolie, umfassend (a) eine Trägerfolie und (b) eine auf einer Oberfläche der Trägerfolie gebildete Magnetaufzeichnungsschicht, die Magnetpulver und einen Harzbinder umfaßt; und

   (B) eine auf einer Oberfläche der Verbundsubstratfolie gebildete Tintenaufnahmeschicht, die amorphe Silicapartikel und einen Harzbinder umfaßt,
   wobei die Trägerfolie eine Dicke von 200 bis 350 $\mu$m besitzt und eine Biegesteifigkeit von 9,81 bis 29,42 mN (1000 bis 3000 mgf), bestimmt nach Gurley, aufweist.

2. Verbundaufzeichnungsfolie nach Anspruch 1, worin die Tintenaufnahmeschicht auf die Oberfläche der Trägerfolie der Verbundsubstratfolie aufgebracht ist, ohne mit der Magnetaufzeichnungsschicht in Verbindung zu stehen.

3. Verbundaufzeichnungsfolie nach Anspruch 1, worin die Tintenaufnahmeschicht auf die Magnetaufzeichnungsschicht der Verbundsubstratfolie aufgebracht ist.

4. Verbundaufzeichnungsfolie nach Anspruch 3, worin eine zusätzliche Tintenaufnahmeschicht auf die Oberfläche der Trägerfolie der Verbundsubstratfolie aufgebracht ist.

5. Verbundaufzeichnungsfolie nach Anspruch 1, worin die Trägerfolie der Verbundsubstratfolie aus einem Mitglied besteht, das ausgewählt ist aus der Gruppe bestehend aus einem unbeschichteten Papierbogen, beschichteten Papierbögen und Kunststofffolien.

6. Verbundaufzeichnungsfolie nach Anspruch 1, worin die Trägerfolie der Verbundsubstratfolie eine Flächenmasse von 100 bis 300 g/m$^2$ besitzt.

7. Verbundaufzeichnungsfolie nach Anspruch 1, worin die amorphen Silicapartikel in der Tintenaufnahmeschicht eine mittlere Größe von 0,5 bis 15 $\mu$m besitzen.

8. Verbundaufzeichnungsfolie nach Anspruch 1, worin die amorphen Silicapartikel in der Tintenaufnahmeschicht eine Ölabsorption von 100 bis 400 ml/100 g aufweisen.

9. Verbundaufzeichnungsfolie nach Anspruch 1, worin der Gehalt an amorphen Silicapartikeln in der Tintenaufnahmeschicht 30 bis 80 Gew.-% beträgt, bezogen auf das Gesamtgewicht der Tintenaufnahmeschicht.

10. Verbundaufzeichnungsfolie nach Anspruch 1, worin der Harzbinder der Tintenaufnahmeschicht wenigstens ein Mitglied umfaßt, das ausgewählt ist aus der Gruppe bestehend aus Polyvinylalkohol und seinen Derivaten, Proteinen, Stärke, Stärkederivaten, Styrol-Butadien-Copolymeren, Copolymeren aus Methylmethacrylat und konjugierten Dienen, Acrylsäureesterpolymeren und -copolymeren, Methacrylsäure-esterpolymeren und -copolymeren, Ethylen-Vinylacetat-Copolymeren, Derivaten der oben erwähnten Polymeren und Copolymeren, die mit wenigstens einer funktionellen Gruppe modifiziert sind, Melamin-Formaldehyd-Harzen, Harnstoff-Formaldehyd-Harzen, Maleinsäureanhydrid-Copolymeren, Polyacrylamidharzen, Polyurethanharzen, ungesättigten Polyesterharzen, Polyvinylbutyralharzen und Alkydharzen.

11. Verbundaufzeichnungsfolie nach Anspruch 1, worin der Gehalt an Harzbinder in der Tintenaufnahmeschicht 20 bis 70 Gew.-% beträgt.

12. Verbundaufzeichnungsfolie nach Anspruch 1, worin das Magnetpulver der Magnetaufzeichnungsschicht wenigstens ein Mitglied umfaßt, das ausgewählt ist aus der Gruppe bestehend aus $\gamma$-Eisenoxid, Cobalt-modifiziertem Eisenoxid, Bariumferrit und Chromoxiden.

13. Verbundaufzeichnungsfolie nach Anspruch 1, worin der Harzbinder der Magnetaufzeichnungsschicht wenigstens ein Mitglied umfaßt, das ausgewählt ist aus der Gruppe bestehend aus Polyvinylalkohol und seinen Derivaten, Proteinen, Styrol-Butadien-Copolymeren, Methylmethacrylat-Butadien-Copolymeren, Styrol-Butadien-Methylmethacrylat-Terpolymeren, Polyacrylharzen, Polyvinylacetatharzen, Polyurethanharzen, Polyvinylchloridharzen, Polyesterharzen und Vinylchlorid-Vinylacetat-Copolymeren.

18

**14.** Verbundaufzeichnungsfolie nach Anspruch 1, worin die Tintenaufnahmeschicht in einer Menge von 3 bis 20 g/m² vorliegt.

**15.** Verbundaufzeichnungsfolie nach Anspruch 1, worin die Magnetaufzeichnungsschicht in einer Menge von 25 bis 40 g/m² vorliegt.

**16.** Verbundaufzeichnungsfolie nach Anspruch 1, worin die Trägerfolie der Verbundsubstratfolie eine mehrschichtige Folie umfaßt, die eine Anzahl von Kunststoffharzfilmen umfaßt, von denen jeder eine Polyolefinharzmatrix und ein in der Matrix dispergiertes anorganisches Pigment umfaßt und von denen jeder in wenigstens einer Richtung gereckt ist, wobei die Trägerfolie bei einer Temperatur von 100°C einen Wärmeschrumpf von 0,5% oder weniger sowohl in Längs- als auch in Querrichtung aufweist, bestimmt nach dem Wärmeschrumpftest nach JIS K 6734-1975.

**17.** Verbundaufzeichnungsfolie nach Anspruch 16, worin das Polyolefinharz in den Kunststoffharzfilmen wenigstens ein Mitglied umfaßt, das ausgewählt ist aus der Gruppe bestehend aus Polyethylen, Polypropylen, Ethylen-Propylen-Copolymeren und Ethylen-Vinylacetat-Copolymeren.

**18.** Verbundaufzeichnungsfolie nach Anspruch 16, worin das anorganische Pigment in den Kunststoffharzfilmen wenigstens ein Mitglied umfaßt, das ausgewählt ist aus der Gruppe bestehend aus Calciumcarbonat, wasserfreiem Ton, Diatomeenerde, Talk und Silica.

**19.** Verbundaufzeichnungsfolie nach Anspruch 16, worin der Gehalt an anorganischem Pigment in den Kunststoffharzfilmen 8 bis 65 Gew.-% beträgt.

## Revendications

**1.** Feuille composite pour l'enregistrement par jet d'encre et magnétique comprenant :

(A) une feuille substrat composite comprenant (a) une feuille support et (b) une couche pour l'enregistrement magnétique formée sur une surface de la feuille support et comprenant des particules magnétiques et une résine liante ; et
(B) une couche réceptrice d'encre formée sur une surface de la feuille substrat composite et comprenant des particules de silice amorphe et une résine liante,
ladite feuille support ayant une épaisseur de 200 à 350 μm et présentant une rigidité à la flexion de 9,81 à 29,42 mN (1000 à 3000 mgf) déterminée par la technique de Gurley.

**2.** Feuille composite pour l'enregistrement selon la revendication 1, dans laquelle la couche réceptrice d'encre est disposée sur la surface de la feuille support de la feuille substrat composite exempte de la couche pour l'enregistrement magnétique.

**3.** Feuille composite pour l'enregistrement selon la revendication 1, dans laquelle la couche réceptrice d'encre est disposée sur la couche pour l'enregistrement magnétique de la feuille substrat composite.

**4.** Feuille composite pour selon la revendication 3, dans laquelle une couche réceptrice d'encre additionnelle est disposée sur la surface de la feuille support de la feuille substrat composite.

**5.** Feuille composite pour l'enregistrement selon la revendication 1, dans laquelle la feuille support de la feuille substrat composite consiste en un membre choisi au sein du coupe comprenant une feuille de papier non revêtu, des feuilles de papier revêtu et des feuilles de polymère synthétique.

**6.** Feuille composite pour l'enregistrement selon la revendication 1, dans laquelle la feuille support de la feuille substrat composite a un poids de base de 100 à 300 g/m².

**7.** Feuille composite pour l'enregistrement selon la revendication 1, dans laquelle les particules de silice amorphe de la couche réceptrice d'encre ont une taille moyenne de 0,5 à 15 μm.

**8.** Feuille composite pour l'enregistrement selon la revendication 1, dans laquelle les particules de silice amorphe de la couche réceptrice d'encre présentent une absorption d'huile de 100 à 400 ml/100 g.

9. Feuille composite pour l'enregistrement selon la revendication 1, dans laquelle les particules de silice amorphe dans la couche réceptrice d'encre sont présentes à raison de 30 à 80 % en poids par rapport au poids total de la couche réceptrice d'encre.

10. Feuille composite pour l'enregistrement selon la revendication 1, dans laquelle la résine liante de la couche réceptrice d'encre comprend au moins un membre choisi au sein du groupe comprenant l'alcool polyvinylique et ses dérivés, les protéines l'amidon, les dérivés de l'amidon, les copolymères styrène-butadiène, les copolymères méthacrylate de méthyle-diènes conjugués, les polymères et copolymères d'esters d'acide acrylique, les polymères et copolymères d'esters d'acide méthacrylique, les copolymères éthylène-acétate de vinyle, les dérivés des polymères et copolymères mentionnés ci-dessus, modifiés avec au moins un groupe fonctionnel, les résines mélamine-formaldéhyde, les résines urée-formaldéhyde, les copolymères d'anhydride maléique, les résines polyacrylamide, les résines polyuréthane, les résines polyester non saturé, les résines polyvinyle butyral et les résines alkyde.

11. Feuille composite pour l'enregistrement selon la revendication 1, dans laquelle, dans la couche réceptrice d'encre, la résine liante est présente à raison de 20 à 70 % en poids.

12. Feuille composite pour l'enregistrement selon la revendication 1, dans laquelle les particules magnétiques de la couche pour l'enregistrement magnétique comprennent au moins un membre choisi au sein du groupe comprenant l'oxyde de fer $\gamma$, l'oxyde de fer modifié au cobalt, la ferrite de baryum et les oxydes de chrome.

13. Feuille composite pour l'enregistrement selon la revendication 1, dans laquelle la résine liante de la couche pour l'enregistrement magnétique comprend au moins un membre choisi au sein du groupe comprenant l'alcool polyvinylique et ses dérivés, les protéines, les copolymères styrène-butadiène, les copolymères méthacrylate de méthyle-butadiène, les terpolymères styrène-butadiène-méthacrylate de méthyle, les résines polyacryliques, les résines acétate de polyvinyle, les résines polyuréthane, les résines chlorure de polyvinyle, les résines polyester et les copolymères chlorure de vinyle-acétate de vinyle.

14. Feuille composite pour l'enregistrement selon la revendication 1, dans laquelle le couche réceptrice d'encre est présente à raison de 3 à 20 g/m$^2$.

15. Feuille composite pour l'enregistrement selon la revendication 1, dans laquelle la couche pour l'enregistrement magnétique est présente à raison de 25 à 40 g/cm$^2$.

16. Feuille composite pour l'enregistrement selon la revendication 1, dans laquelle la feuille support de la feuille substrat composite comprend une feuille multicouche comprenant une pluralité de films de résine plastique comprenant chacun une matrice résine de polyoléfine et un pigment minéral dispersé dans ladite matrice et orientés chacun dans une direction au moins, la feuille support présentant un rétrécissement thermique de 0,5 % ou moins déterminé par le test de rétrécissement thermique selon JIS K 6734-1975 à la fois dans la direction longitudinale et dans la direction transversale de ceux-ci, à une température de 100°C.

17. Feuille composite pour l'enregistrement selon la revendication 16, dans laquelle la résine polyoléfine dans les films de résine plastique comprend au moins un membre choisi au sein du groupe comprenant le polyéthylène, le polypropylène, les copolymères éthylène-propylène, les copolymères éthylène-acétate de vinyle.

18. Feuille composite pour l'enregistrement selon la revendication 16, dans laquelle le pigment minéral dans les films de résine plastique comprend au moins un membre choisi au sein du groupe comprenant le carbonate de calcium, l'argile anhydre, la terre de diatomée, le talc et la silice.

19. Feuille composite pour l'enregistrement selon la revendication 16, dans laquelle le pigment minéral dans les films de résine plastique est présent à raison de 8 à 65 % en poids.

# Fig.1

# Fig.2

# Fig.3